# EUROPÄISCHE PATENTSCHRIFT

(11) **EP 3 262 944 B1**
(45) Veröffentlichungstag und Bekanntmachung des Hinweises auf die Patenterteilung: **30.10.2019**
(21) Anmeldenummer: 16177145.6
(22) Anmeldetag: 30.06.2016
(51) Int. Cl.: A22C 25/16, B65G 23/08

(54) **VORRICHTUNG ZUM ENTFERNEN VON STIFTGRÄTEN AUS FISCHFILETS**
DEVICE FOR REMOVING PIN-SHAPED BONES FROM FISH FILLETS
DISPOSITIF DE RETRAIT D'ARETES DANS DES FILETS DE POISSON

(43) Veröffentlichungstag der Anmeldung: 03.01.2018
(73) Patentinhaber: Nordischer Maschinenbau Rud. Baader GmbH + Co. KG, 23560 Lübeck (DE)
(72) Erfinder: Rusko, Torsten, 23923 Herrnburg (DE); Barsch, Thomas, 23564 Lübeck (DE); Vahab, Ali, 16345 Stockholm (SE)
(74) Vertreter: Stork Bamberger Patentanwälte PartmbB

(56) Entgegenhaltungen:
- EP-A2- 1 432 104
- WO-A1-01/43553
- WO-A2-2007/087997
- GB-A- 600 287
- GB-A- 1 221 670

## Beschreibung

Die vorliegende Erfindung betrifft eine Vorrichtung zum Entfernen von Stiftgräten aus Fischfilets, umfassend mindestens eine drehbar gelagerte, profilierte Walzeneinheit mit einem einen Klemmspalt bildendenden Gegenlageelement, wobei die Walzeneinheit und das Gegenlageelement eingerichtet sind, die Stiftgräten in dem Klemmspalt durch Klemmung zu fassen und unter Zugkraftbeaufschlagung aus den Fischfilets zu entfernen.

Derartige Vorrichtung und Verfahren kommen insbesondere bei der halb- oder vollautomatischen Verarbeitung von Fischen, insbesondere zum Entgräten von Fischfilets, zum Einsatz. Während des Verarbeitungsprozesses werden die Fische bzw. die daraus hergestellten Fischfilets von Gräten, insbesondere von den festsitzenden Stiftgräten, im Englischen auch "pinbones" genannt, befreit.

Eine derartige Vorrichtung sowie ein entsprechendes Verfahren zum Filetieren geschlachteter Fische ist beispielsweise aus dem Dokument WO 02/076220 A1 bekannt. Das Entfernen der Stiftgräten erfolgt mittels einer doppelt profilierten Walze, die diese durch Klemmung greift und aus dem Fleisch der Fischfilets entfernt. Die zu entgrätenden Fischprodukte werden der doppelt profiliderten Walze mittels einer Fördereinrichtung automatisch zugeführt. Weitere Vorrichtungen mit jeweils rotierend angetriebenen Walzen zum Entfernen von Stiftgräten sind beispielsweise aus dem Dokument WO 94/10848 sowie WO 2008/020786 A1 und WO 01/43553 A1 bekannt.

Nachteilig ist, dass der Antrieb der profilierten Walzeneinheit in der Regel entweder über einen vollständig gekapselten Elektromotor erfolgt, oder Walzeneinheit und Elektromotor räumlich voneinander getrennt angeordnet sind. Die Kapselung der Elektromotoren bzw. die räumliche Trennung von der Walzeneinheit folgt aus gleich mehreren Rahmenbedingungen. Einerseits ist der Antriebsmotor vor Verunreinigung und Feuchtigkeit zu schützen, andererseits sind hygienische Standards einzuhalten. Diese Förderungen führen zu einer entsprechend komplexen Vorrichtung, die nur mit großem Aufwand gereinigt werden kann. Eine Kapselung des Elektromotors behindert das Abführen von Verlustwärme und führt im Ergebnis aufgrund der daraus resultierenden hohen Betriebstemperatur zu einer Verkürzung der Lebensdauer.

Es ist daher Aufgabe der vorliegenden Erfindung, eine möglichst kompakte Vorrichtung vorzuschlagen, die einerseits leicht zu reinigen ist, die Antriebseinheit wirksam vor Eindringen von Feuchtigkeit sowie vor Verschmutzung schützt und stets einen zuverlässigen Betrieb durch Einhaltung vorgegebener Betriebstemperaturen gewährleistet.

Die Aufgabe wird durch eine Vorrichtung mit den eingangs genannten Merkmalen dadurch gelöst, dass die Walzeneinheit einen Innenraum aufweist, in dem eine zum rotierenden Antreiben der Walzeneinheit eingerichtete Antriebseinheit angeordnet ist. Anders ausgedrückt ist die Walzeneinheit als Hohlwalze ausgebildet, in deren Innenraum die Antriebseinheit vom Außenraum vollständig gekapselt angeordnet ist, wobei die Walzeneinheit einen Innenraum aufweist, in dem eine zum rotierenden Antreiben der Walzeneinheit eingerichtete Antriebseinheit angeordnet ist, und wobei der Innenraum fluiddurchgängig eingerichtet ist und wobei die Walzeneinheit mindestens ein Zuführelement zum Zuführen eines Fluides in den Innenraum und mindestens ein Abführelement zum Abführen des Fluides aus dem Innenraum umfasst und wobei das Fluid als Kühlmedium eingerichtet ist, um Stiftgräten von gekühlten Fischfilets zu entfernen, ohne dass es zu einer oberflächlichen Erwärmung des Fischfilets kommt. Auf diese Weise wird eine hoch kompakte Bauform der gesamten Walzeneinheit erreicht, da die Antriebseinheit in der Walzeneinheit integriert angeordnet ist. Die kompakte Bauform erleichtert einerseits die Reinigung der erfindungsgemäßen Vorrichtung, andererseits ist die Antriebseinheit auf diese Weise zuverlässig gegen das Eindringen von Feuchtigkeit, Wasser, Verunreinigungen oder dergleichen geschützt.

Mit der Fluiddurchgängigkeit des Innenraums wird erreicht, dass sowohl die Antriebseinheit als auch die Walzeneinheit durch das Zu- und Abführen eines Fluides stets auf einer vorgegebenen Betriebstemperatur oder einem vorgegebenen Betriebstemperaturbereich gehalten werden. Das Fluid ist als Kühlmedium eingerichtet, um die von der Antriebseinheit produzierte Abwärme aufzunehmen und aus dem Innenraum abzutransportieren.

Vorteilhafterweise wird so die Antriebseinheit auf einer vorgegebenen Betriebstemperatur gehalten und in jedem Fall ein unzulässiges Überschreiten der Temperatur der Antriebseinheit, das andernfalls zu einem vorzeitigen Verschleiß und/oder einer Verkürzung der Lebensdauer der Antriebseinheit führen kann, verhindert. Ein weiterer Vorteil besteht darin, dass nicht nur die Temperatur der Antriebseinheit mittels des Fluides beinflussbar ist, sondern auch die Temperatur der Walzeneinheit über das zugeführte Fluid in einem weiten Temperaturbereich einstellbar eingerichtet ist. Hier wird insbesondere ein unzulässiges Erwärmen der Walzeneinheit durch von der Antriebseinheit produzierter Abwärme unter allen Umständen vermieden. Vorteilhafterweise ist es so auch möglich, mit der erfindungsgemäßen Vorrichtung Stiftgräten von gekühlten Fischfilets-zu entfernen, ohne dass es zu einer oberflächlichen Erwärmung der Fischfilets kommt.

Gemäß einer bevorzugten Weiterbildung der Erfindung umfasst die Walzeneinheit mindestens ein Zuführelement zum Zuführen des Fluides in den Innenraum und mindestens ein Abführelement zum Abführen des Fluides aus dem Innenraum. So wird eine kontinuierliche Durchströmung des Innenraums mit dem Fluid sichergestellt. Die Walzeneinheit ist folglich derart eingerichtet, dass das Fluid über das mindestens eine Zuführelement dem Innenraum zugeführt wird und diesen anschließend über das mindestens eine Abführelement wieder verlässt. Das Fluid dient als Wärmeträgermedium, um Wärme von der Antriebseinheit bzw. der Walzeneinheit aufzunehmen und aus dem Innenraum abzutransportieren. Je nach gewünschtem Temperaturniveau wird über das Fluid als Wärmeträgermedium alternativ Wärme zugeführt. Als Fluid kommt vorzugsweise Luft bzw. Pressluft zum Einsatz. Optional kommen flüssige Medien als Fluid zum Einsatz, insbesondere elektrisch nicht-leitende flüssige Medien.

Eine zweckmäßige Ausgestaltung der Erfindung ist dadurch gekennzeichnet, dass das mindestens eine Zuführelement als eine erste Stirnseitendurchführung und das mindestens eine Abführelement als eine zweite Stirnseitendurchführung der Walzeneinheit ausgebildet ist. So wird eine kompakte Bauweise der erfindungsgemäßen Vorrichtung erzielt.

Gemäß einer besonders bevorzugten Ausführungsform der Erfindung ist vorgesehen, dass das Zuführelement und/oder das Abführelement Teil der Drehachse der Walzeneinheit sind. Das Zuführelement bzw. das Abführelement erfüllen daher jeweils eine Doppelfunktion. So sind diese einerseits als Drehachse der Walzeneinheit ausgebildet und andererseits eingerichtet, das Fluid in den Innenraum und aus diesem wieder herauszuleiten. Dies bietet den Vorteil, dass die erfindungsgemäße Vorrichtung aufgrund ihrer kompakten Bauform besonders leicht zu reinigen ist und damit den hohen hygienischen Anforderungen im Bereich der Lebensmittelverarbeitung gerecht wird.

Eine vorteilhafte Weiterbildung der Erfindung zeichnet sich dadurch aus, dass das Zuführelement ein Adapterelement mit einem drehfest ausgebildeten Fluidanschluss zur Aufnahme einer Fluidzuführleitung umfasst. Das Adapterelement ist als eine Art Übergangselement eingerichtet, das die Fluidzuführleitung mit dem Zuführelement fluiddicht verbindet. Über die Fluidzuführleitung wird das Fluid mittels dem Adapterelement und dem Zuführelement in den Innenraum geleitet.

Gemäß einer vorteilhaften Weiterbildung der Erfindung umfasst die Antriebseinheit mindestens einen Elektromotor. Der Elektromotor ist weiter bevorzugt als bürstenloser Gleichstrommotor ausgebildet. Der mindestens eine Elektromotor ist insbesondere als Innen- oder Außenläufer eingerichtet. Sofern ein Außenläuferelektromotor, das heißt ein Elektromotor mit drehfest angeordnetem Stator sowie einen den Außenläufer bildenden Rotor, verwendet wird, bildet vorzugsweise der Außenläufer zugleich die Walzeneinheit. Kommt ein Innenläuferelektromotor zum Einsatz, das heißt ein Motor mit außenliegendem drehfest angeordneten Stator und einem mit der Motorwelle verbunden innenliegenden Rotor, ist der Elektromotor als Direktantrieb unmittelbar mit seiner Welle mit der Walzeneinheit verbunden. Weiter bevorzugt ist der Elektromotor als Getriebemotor eingerichtet. In diesem Fall ist der Elektromotor über ein Getriebe mit der Walzeneinheit verbunden.

Gemäß einer bevorzugten Weiterbildung der Erfindung ist eine Motoranschlussleitung zur Bereitstellung der elektrischen Antriebsenergie für den Elektromotor aus dem Innenraum der Walzeneinheit durch den Fluidanschluss und die Fluidzuführleitung geführt. Dies bietet den Vorteil, dass die Motoranschlussleitung aufgrund ihrer innenliegenden Anordnung vollständig durch die Fluidzuführleitung, den Fluidanschluss sowie das Zuführelement gegenüber dem Außenraum gekapselt angeordnet ist. Dies unterstützt die kompakte Bauweise der erfindungsgemäßen Vorrichtung und erleichtert die Reinigung der erfindungsgemäßen Vorrichtung erheblich. Zudem ist der Elektromotor gegen das Eindringen von Feuchtigkeit oder vor Verunreinigungen geschützt angeordnet.

Gemäß einer weiteren zweckmäßigen Ausbildung der Erfindung ist vorgesehen, die Fluidzuführleitung mit der darin geführten Motoranschlussleitung mit einer Trenneinrichtung zu verbinden, wobei die Trenneinrichtung eingerichtet ist, die Motoranschlussleitung mittels eines fluiddichten Adapterelements in den Außenraum zu führen. Anders ausgedrückt ist die Trenneinrichtung eingerichtet, die Walzeneinheit mit dem Fluid zu versorgen und die Motoranschlussleitung zur Bereitstellung der elektrischen Antriebsenergie fluiddicht in den Außenraum auszukoppeln. Bevorzugt kommt als Fluid Druckluft zum Einsatz. Alternativ kommen als Fluid weitere gasförmige oder flüssige Stoffe zum Einsatz.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung der erfindungsgemäßen Vorrichtung in perspektivischer Ansicht,

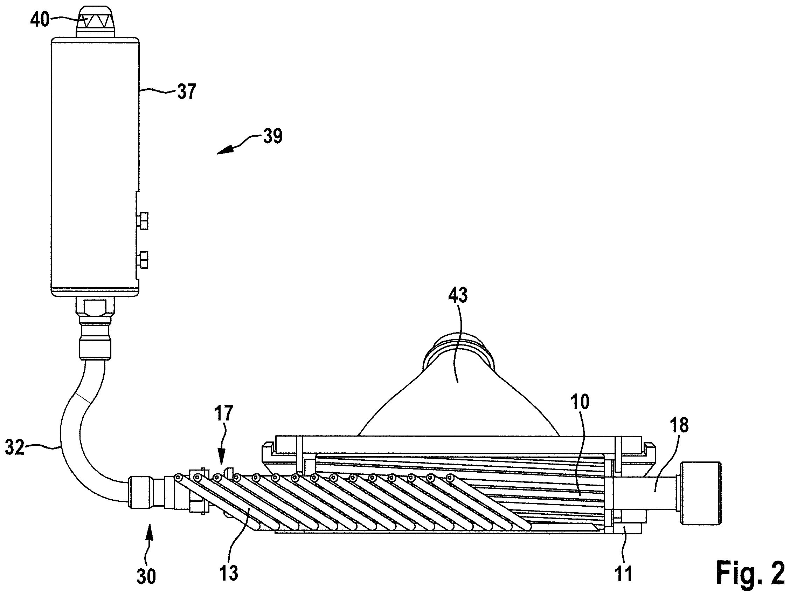

- Fig. 2: eine Ansicht der erfindungsgemäßen Vorrichtung mit Blickrichtung in Förderrichtung,

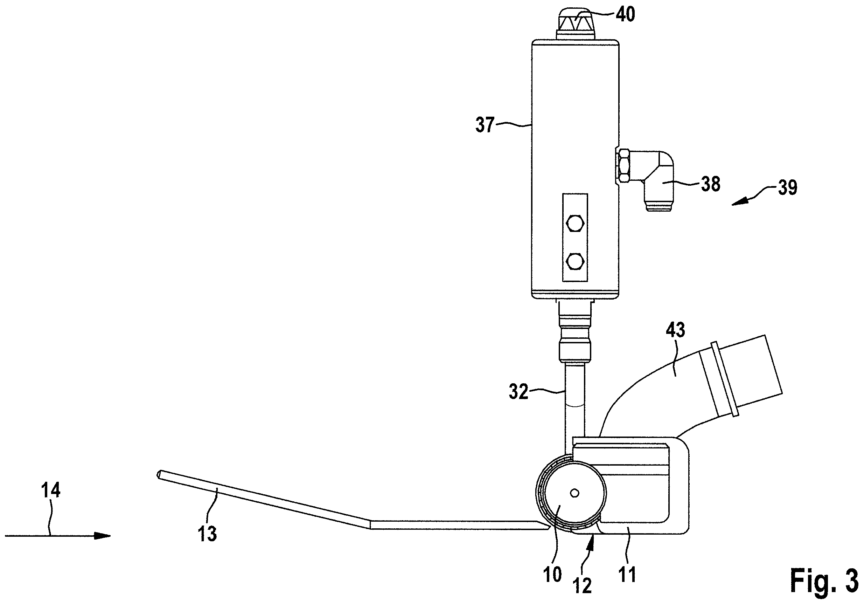

- Fig. 3: eine Seitenansicht der erfindungsgemäßen Vorrichtung
und
- Fig. 4: eine Detaildarstellung der erfindungsgemäßen Vorrichtung mit im Schnitt gezeigter Walzeneinheit.

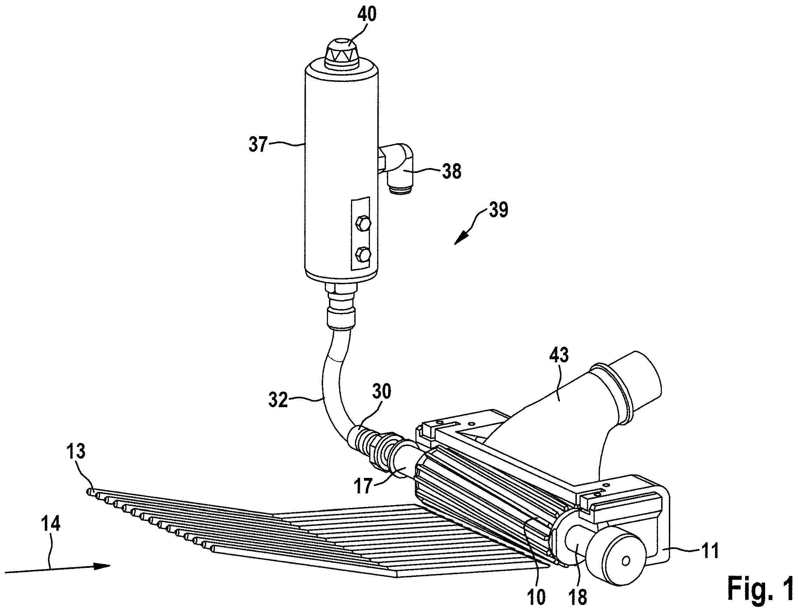

In Fig. 1 ist die erfindungsgemäße Vorrichtung schematisch in perspektiver Ansicht dargestellt. Die erfindungsgemäße Vorrichtung ist eingerichtet, um Stiftgräten aus Fischfilets vollautomatisch zu entfernen. Hierzu werden die - in der Zeichnung nicht gezeigten - Fischfilets mittels einer geeigneten Fördereinrichtung der erfindungsgemäßen Vorrichtung zum Entfernen von Stiftgräten kontinuierlich zugeführt. Aus Gründen der besseren Übersichtlichkeit ist eine solche Förderreinrichtung in der Zeichnung nicht gezeigt.

Die erfindungsgemäße Vorrichtung umfasst mindestens eine drehbar gelagerte, profilierte Walzeneinheit 10. Die Walzeneinheit 10 bildet mit einem Gegenlageelement 11 ein Klemmspalt 12. Die Walzeneinheit 10 und das Gegenlageelement 11 sind eingerichtet, die Stiftgräten in dem Klemmspalt 12 durch Klemmung zu fassen und unter Zugkraftbeaufschlagung aus den Fischfilets zu entfernen. Vorzugsweise umfasst die erfindungsgemäße Vorrichtung einen Niederhalter 13, mit dem die in Förderrichtung 14 zu der erfindungsgemäßen Vorrichtung geförderten Fischfilets derart auf die - in der Zeichnung nicht gezeigte - Fördereinrichtung niedergedrückt werden. So werden die jeweils an der Oberfläche der Fischfilets hervorstehenden Stiftgräten zwischen der Walzeneinheit 10 und dem Gegenlageelement 11 in dem Klemmspalt 12 mittels Klemmung erfasst und durch die rotierende Bewegung der profilierten Walzeneinheit 10 aus den Fischfilets herausgezogen.

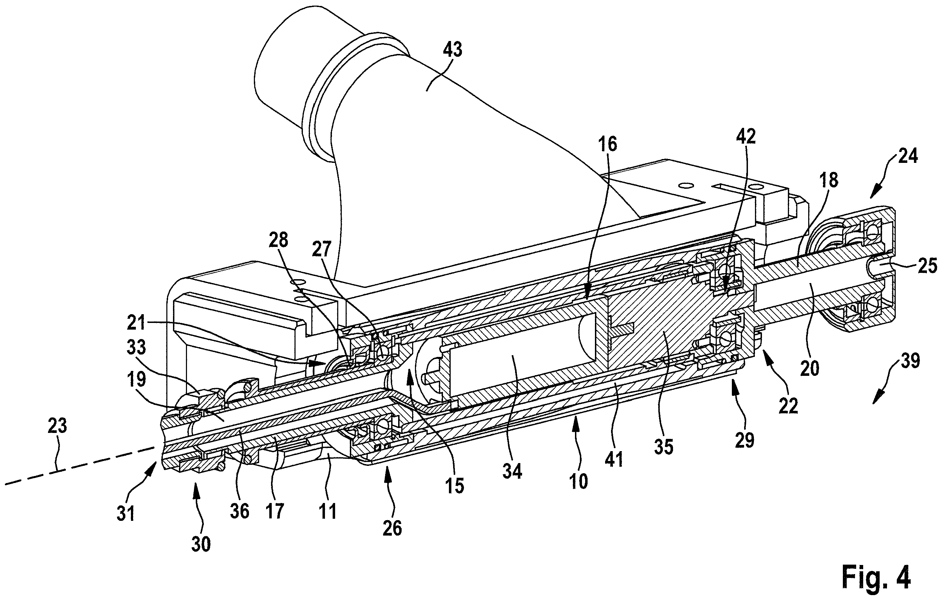

Wie der Fig. 4 zu entnehmen ist, die eine Detaildarstellung der erfindungsgemäßen Vorrichtung mit geschnittener Walzeneinheit 10 zeigt, umfasst die Walzeneinheit 10 einen Innenraum 15, in dem eine Antriebseinheit 16 angeordnet ist, die zum Antreiben der Walzeneinheit 10 eingerichtet ist. Mit anderen Worten ist die Antriebseinheit 16 mittels der Walzeneinheit 10 gekapselt angeordnet. Die Walzeneinheit 10 bildet mit der Antriebseinheit 16 eine kompakte in sich gekapselte Baueinheit.

Der Innenraum 15 ist fluiddurchgängig eingerichtet. Auf diese Weise wird die Antriebseinheit 16 zum Abtransport von Abwärme mit einem Fluid umspült. Als Fluid eignen sich sowohl gasförmige als auch flüssige Medien. Die Fluiddurchgängigkeit des Innenraums 15 dient nicht nur dem Abtransport von in der Antriebseinheit 16 erzeugter Verlustwärme sondern kann wahlweise auch zum Beheizen oder Kühlen der Walzeneinheit 10 genutzt werden. Bevorzugt ist die erfindungsgemäße Vorrichtung derart eingerichtet, dass der Innenraum 15 kontinuierlich oder diskontinuierlich von dem Fluid durchströmt wird.

Hierzu umfasst die Walzeneinheit 10 vorteilhafterweise mindestens ein Zuführelement 17 zum Zuführen des Fluides in den Innenraum 15 sowie mindestens ein Abführelement 18 zum Abführen des Fluides aus dem Innenraum 15. Wie in der Fig. 4 gezeigt, sind das Zuführelement 17 sowie das Abführelement 18 insbesondere als Hohlwelle ausgebildet. Über die von dem Zuführelement 17 beziehungsweise dem Abführelement 18 gebildeten Innenrohre 19, 20 wird das Fluid dem Innenraum 15 zugeführt, durchströmt den Innenraum 15, um diesen schließlich über das Abführelement 18 und dessen Innenrohr 20 wieder zu verlassen. Das Zuführelement 17 sowie das Abführelement 18 bilden daher eine erste Stirnseitenwanddurchführung 21 sowie eine zweite Stirnseitenwanddurchführung 22 der Walzeneinheit 10.

Vorzugsweise sind das Zuführelement 17 und das Abführelement 18 Teil der Drehachse 23 der Walzeneinheit 10. Es ist auch möglich, dass jeweils nur das Zuführelement 17 oder das Abführelement 18 einen Teil der Drehachse 23 bilden.

Gemäß der in der Fig. 4 gezeigten vorteilhaften Ausführungsform sind die profilierte Walzeneinheit 10, die zweite Stirnseitenwanddurchführung 22 und das Abführelement 18 einstückig ausgebildet. Das Abführelement 18 ist vorzugsweise mittels eines ersten Lagerelements 24 drehbar gelagert, so dass die von der Antriebseinheit 16 angetriebene profilierte Walzeneinheit 10 um die Drehachse 23 drehbar eingerichtet ist.

Das erste Lagerelement 24 weist eine erste Innendurchführung 25 auf, die mit dem Innenrohr 20 durchgängig verbunden ist. Hingegen ist das Zuführelement 17 drehfest angeordnet, ebenso wie die erste Seitenwanddurchführung 21. Vorzugsweise sind das Zuführelement 17 und die erste Seitenwanddurchführung 21 einstückig ausgebildet. Im Bereich der ersten Seitenwanddurchführung 21 ist ein zuführseitiges Lagerelement 26 angeordnet. Das zuführseitige Lagerelement 26 umfasst ein Lagerringelement 27, mittels dessen die Walzeneinheit 10 drehbar gelagert ist. Das zuführseitige Lagerelement 26 umfasst weiter ein Dichtelement 28, das Schutz vor dem Eindringen von Wasser oder unerwünschten Verunreinigungen in das zuführseitige Lagerelement 26 bietet. Ferner ist die Walzeneinheit 10 über ein abführseitiges Lagerelement 29 drehbar gelagert.

Die vorliegende Erfindung ist jedoch nicht auf das in Fig. 4 gezeigte Ausführungsbeispiel beschränkt. Alternativ ist vorgesehen, dass Abführelement 18 drehfest anzuordnen, während das Zuführelement 17 mit der ersten Stirnseitenwanddurchführung 21 und der Walzeneinheit 10 drehbar eingerichtet ist, so dass die vorgenannten Teile mit der Walzeneinheit 10 mitrotierend eingerichtet sind.

Vorteilhafterweise ist vorgesehen, dass das Zuführelement 17 ein Adapterelement 30 mit einem drehfest ausgebildeten Fluidanschluss 31 zur Aufnahme einer Fluidzuführleitung 32 umfasst. Das Adapterelement 30 umfasst beispielsweise eine Überwurfhülse 33, mittels derer das Adapterelement 30 an dem Zuführelement 17 fluiddicht angeordnet ist. Im Fall der zuvor beschriebenen Ausführform mit nicht drehfest ausgebildetem Zuführelement 17 ist die Überwurfhülse 33 als Übergangselement zwischen dem drehfesten Adapterelement 30 und dem mit der Walzeneinheit 10 rotierenden Zuführelement 17 eingerichtet.

Die Antriebseinheit 16 umfasst mindestens einen Elektromotor, insbesondere einen bürstenlosen Gleichstrommotor. Der Elektromotor ist vorzugsweise als ein - in der Zeichnung nicht gezeigter - Außenläufer ausgebildet, bei dem vorteilhafterweise die Walzeneinheit 10 zugleich den Außenläufer bildet.

Die in der Fig. 4 gezeigte bevorzugte Ausführungsform der vorliegenden Erfindung umfasst einen Innenläuferelektromotor. Vorzugsweise ist der Elektromotor 34 über ein Getriebe 35 mit der Walzeneinheit 10 verbunden. Das Getriebe 35 ist hierzu vorzugsweise stirnseitig an dem Elektromotor 34 angeordnet.

Zur Bereitstellung der erforderlichen elektrischen Antriebsenergie für den Elektromotor 34 ist eine Motoranschlussleitung 36 aus dem Innenraum 15 durch den Fluidanschluss 31 und die Fluidzuführleitung 32 geführt. Die Motoranschlussleitung 36 verläuft daher ausgehend von dem Elektromotor 34 im Innenraum 15 durch das Zuführelement 17, über das Adapterelement 30 und die Fluidzuführleitung 32 zu einer Trenneinrichtung 37. Die Fluidzuführleitung 32 mit der daran geführten Motoranschlussleitung 36 ist so mit der Trenneinrichtung 37 verbunden. Die Trenneinrichtung 37 ist eingerichtet, die Motoranschlussleitung 36 mittels eines fluiddichten Adapterelements 40 in den Außenraum 39 zu überführen. Die Trenneinrichtung 37 ist beispielsweise als zylindrischer Hohlkörper ausgebildet, und umfasst einen weiteren Anschluss, nämlich eine Fluidzuführung 38, über die Fluid von außen zugeführt wird. Vorzugsweise ist die Fluidzuführung 38 stirnseitig an der Trenneinrichtung 37 angeordnet, während das fluiddichte Adapterelement 40 seitlich angeordnet ist.

Die Motoranschlussleitung 36 wird durch das fluiddichte Adapterelement 40 - in der Zeichnung nicht gezeigt - in den Außenraum 39 geführt. Als Fluid kommt vorzugsweise Druckluft zum Einsatz, so dass der Innenraum 15 von einem gleichmäßigen Kühlluftstrom durchströmt wird. Hierzu ist vorgesehen, dass die in dem Innenraum 15 angeordnete Antriebseinheit 16 zumindest teilweise von einem Ringspalt 41 umgeben ist, so dass zwischen der Innenseite der Walzeneinheit 10 und der Antriebseinheit 16 das Fluid im Wesentlichen frei strömen kann. Vorzugsweise sind - wie in der Fig. 4 jedoch nur schematisch dargestellt - entsprechende Umfangsausnehmungen 42 vorgesehen, die eingerichtet sind, die Fluiddurchgängigkeit des Innenraums 15 sicherzustellen.

Optional umfasst die erfindungsgemäße Vorrichtung eine Absaugeinrichtung 43, über die durch Unterdruckbeaufschlagung mittels der Walzeneinheit 10 entfernte Stiftgräten bzw. Fleischreste und/oder Verunreinigungen abgesaugt werden.

## Patentansprüche

1. Vorrichtung zum Entfernen von Stiftgräten aus Fischfilets, umfassend
mindestens eine drehbar gelagerte, profilierte Walzeneinheit (10) mit einem einen Klemmspalt (12) bildenden Gegenlageelement (11), wobei die Walzeneinheit (10) und das Gegenlagenelement (11) eingerichtet sind, die Stiftgräten in dem Klemmspalt (12) durch Klemmung zu fassen und unter Zugkraftbeaufschlagung aus den Fischfilets zu entfernen,
**dadurch gekennzeichnet, dass** die Walzeneinheit (10) einen Innenraum (15) aufweist, in dem eine zum rotierenden Antreiben der Walzeneinheit (10) eingerichtete Antriebseinheit (16) angeordnet ist, und wobei
der Innenraum (15) fluiddurchgängig eingerichtet ist und wobei die Walzeneinheit (10) mindestens ein Zuführelement (17) zum Zuführen eines Fluides in den Innenraum (15) und mindestens ein Abführelement (18) zum Abführen des Fluides aus dem Innenraum (15) umfasst und wobei das Fluid als Kühlmedium eingerichtet ist, um Stiftgräten von gekühlten Fischfilets zu entfernen, ohne dass es zu einer oberflächlichen Erwärmung des Fischfilets kommt.

2. Vorrichtung nach Anspruch 1, **dadurch gekennzeichnet, dass** das mindestens eine Zuführelement (17) als eine erste Stirnseitendurchführung (21) und das mindestens eine Abführelement (18) als eine zweite Stirnseitendurchführung (22) der Walzeneinheit (10) ausgebildet ist.

3. Vorrichtung nach einem der Ansprüche 1 oder 2, **dadurch gekennzeichnet, dass** das Zuführelement (17) und/oder das Abführelement (18) Teil der Drehachse (23) der Walzeneinheit (10) sind.

4. Vorrichtung nach einem der Ansprüche 1 bis 3, **dadurch gekennzeichnet, dass** das Zuführelement (17) ein Adapterelement (30) mit einem drehfest ausgebildeten Fluidanschluss (31) zur Aufnahme einer Fluidzuführleitung (32) umfasst.

5. Vorrichtung nach einem der Ansprüche 1 bis 4, **dadurch gekennzeichnet, dass** die Antriebseinheit (16) mindestens einen Elektromotor (34) umfasst.

6. Vorrichtung nach Anspruch 5, **dadurch gekennzeichnet, dass** der Elektromotor (34) über ein Getriebe (35) mit der Walzeneinheit (10) verbunden ist.

7. Vorrichtung nach Anspruch 5, **dadurch gekennzeichnet, dass** der Elektromotor (34) ein Außenläufermotor ist und der Außenläufer durch die Walzeneinheit (10) gebildet wird.

8. Vorrichtung nach einem der Ansprüche 5 bis 7, **dadurch gekennzeichnet, dass** eine Motoranschlussleitung (36) zur Bereitstellung der elektrischen Antriebsenergie für den Elektromotor (34) aus dem Innenraum (15) der Walzeneinheit (10) durch den Fluidanschluss (31) und die Fluidzuführleitung (32) geführt ist.

9. Vorrichtung nach Anspruch 8, **dadurch gekennzeichnet, dass** die Fluidzuführleitung (32) mit der darin geführten Motoranschlussleitung (36) mit einer Trenneinrichtung (37) verbunden ist, wobei die Trenneinrichtung (37) eingerichtet ist, die Motoranschlussleitung (36) mittels eines fluiddichten Adapterelements (40) in einen Außenraum (39) zu führen.

10. Vorrichtung nach einem der Ansprüche 1 bis 9, **dadurch gekennzeichnet, dass** das Fluid Druckluft ist.

## Claims

1. Apparatus for removing pin bones from fish fillets, comprising
at least one rotatably supported, profiled roller unit (10) comprising a counter-bearing element (11) forming a clamping gap (12), wherein the roller unit (10) and the counter-bearing element (11) are designed to grasp the pin bones in the clamping gap (12) by clamping and to remove said bones from the fish fillets by applying tensile force,
**characterised in that**
the roller unit (10) comprises an inner space (15) in which a drive unit (16) designed for rotary driving of the roller unit (10) is arranged, and wherein the inner space (15) is designed for the passage of fluid and wherein the roller unit (10) comprises at least one delivery element (17) for delivering a fluid into an inner space (15) and at least one discharge element (18) for discharging the fluid from the inner space (15) and wherein the fluid is designed as a coolant in order to remove pin bones from refrigerated fish fillets without any superficial heating of the fish fillets occurring.

2. Apparatus according to claim 1, **characterised in that** the at least one delivery element (17) is designed as a first end side wall through-bearing (21) and the at least one discharge element (18) as a second end side wall through-bearing (22) of the roller unit (10).

3. Apparatus according to one of claims 1 or 2, **characterised in that** the delivery element (17) and/or the discharge element (18) are part of the axis of rotation (23) of the roller unit (10).

4. Apparatus according to any one of claims 1 to 3, **characterised in that** the delivery element (17) comprises an adapter element (30) with a non-rotatably designed fluid connection (31) for receiving a fluid delivery line (32).

5. Apparatus according to any one of claims 1 to 4, **characterised in that** the drive unit (16) comprises at least one electric motor (34).

6. Apparatus according to claim 5, **characterised in that** the electric motor (34) is connected to the roller unit (10) via a gearing mechanism (35).

7. Apparatus according to claim 5, **characterised in that** the electric motor (34) is an external rotor motor and the external rotor is formed by the roller unit (10).

8. Apparatus according to any one of claims 5 to 7, **characterised in that** a motor connecting line (36) for providing the electrical drive energy for the electric motor (34) is guided from the inner space (15) of the roller unit (10) through the fluid connection (31) and the fluid delivery line (32).

9. Apparatus according to claim 8, **characterised in that** the fluid delivery line (32) with the motor connecting line (36) guided therein is connected to a separating device (37), wherein the separating device (37) is designed to guide the motor connecting line (36) into an outer space (39) by means of a fluid-impermeable adapter element (40).

10. Apparatus according to one of claims 1 to 9, **characterised in that** the fluid is compressed air.

## Revendications

1. Dispositif pour retirer des arêtes de filets de poisson, comprenant
au moins une unité à rouleaux (10) profilée, disposée mobile en rotation, dotée d'un élément antagoniste (11) formant une fente de serrage (12), ladite unité à rouleaux (10) et ledit élément antagoniste (11) étant conçus pour appréhender par pincement les arêtes dans la fente de serrage (12) et pour les retirer des filets de poisson sous application d'une force de traction,
**caractérisé en ce que**
l'unité à rouleaux (10) présente un espace intérieur (15) dans lequel est agencée une unité d'entraînement (16) conçue pour entraîner en rotation l'unité à rouleaux (10), et
l'espace intérieur (15) étant conçu perméable aux fluides, et l'unité à rouleaux (10) comprenant au moins un élément d'amenée (17) destiné à amener un fluide dans l'espace intérieur (15), et au moins un élément d'évacuation (18) destiné à évacuer le fluide hors de l'espace intérieur (15), et le fluide étant conçu en tant que milieu réfrigérant pour retirer des arêtes de filets de poissons réfrigérés sans qu'il y ait réchauffement superficiel du filet de poisson.

2. Dispositif selon la revendication 1, **caractérisé en ce que** ledit au moins un élément d'amenée (17) est réalisé en tant qu'un premier conduit par la tête (21) et ledit au moins un élément d'évacuation (18) en tant qu'un deuxième conduit par la tête (22) de l'unité à rouleaux (10).

3. Dispositif selon l'une quelconque des revendications 1 ou 2, **caractérisé en ce que** l'élément d'amenée (17) et/ou l'élément d'évacuation (18) font partie de l'axe de rotation (23) de l'unité à rouleaux (10).

4. Dispositif selon l'une quelconque des revendications 1 à 3, **caractérisé en ce que** l'élément d'amenée (17) comprend un élément adaptateur (30) doté d'un raccordement à fluide (31) réalisé rigide en rotation, destiné à recevoir une conduite d'amenée de fluide (32).

5. Dispositif selon l'une quelconque des revendications 1 à 4, **caractérisé en ce que** l'unité d'entraînement (16) comprend au moins un moteur électrique (34).

6. Dispositif selon la revendication 5, **caractérisé en ce que** le moteur électrique (34) est relié à l'unité à rouleaux (10) par un engrenage (35).

7. Dispositif selon la revendication 5, **caractérisé en ce que** le moteur électrique (34) est un moteur à rotor externe et que le rotor externe est constitué par l'unité à rouleaux (10).

8. Dispositif selon l'une quelconque des revendications 5 à 7, **caractérisé en ce qu'**une conduite de raccordement de moteur (36) passe, pour fournir l'énergie électrique d'entraînement au moteur électrique (34), de l'espace intérieur (15) de l'unité à rouleaux (10) au travers du raccordement de fluide (31) et de la conduite d'amenée de fluide (32).

9. Dispositif selon la revendication 8, **caractérisé en ce que** la conduite d'amenée de fluide (32) est, avec la conduite de raccordement du moteur (36), reliée à un dispositif séparateur (37), ledit dispositif séparateur (37) étant conçu pour conduire la conduite de raccordement du moteur (36) dans un espace extérieur (39) au moyen d'un élément adaptateur (40) imperméable aux fluides.

10. Dispositif selon l'une quelconque des revendications 1 à 9, **caractérisé en ce que** ledit fluide est de l'air comprimé.
